# EUROPÄISCHE PATENTSCHRIFT

(11) **EP 1 880 803 B1**
(45) Veröffentlichungstag und Bekanntmachung des Hinweises auf die Patenterteilung: **05.09.2018**
(21) Anmeldenummer: 07012979.6
(22) Anmeldetag: 03.07.2007
(51) Int. Cl.: B23P 19/06, B25B 29/02

(54) **Schraubenvorspanneinrichtung**
Screw leader device
Dispositif de précontrainte de vissage

(30) Priorität: 17.07.2006 DE 102006033320
(43) Veröffentlichungstag der Anmeldung: 23.01.2008
(73) Patentinhaber: Airbus Defence and Space GmbH, 82024 Taufkirchen (DE)
(72) Erfinder: Weimer, Peter, 88677 Markdorf (DE)
(74) Vertreter: Schicker, Silvia

(56) Entgegenhaltungen:
- EP-A1- 0 695 883
- CH-A5- 668 932
- DE-B1- 2 625 407
- FR-A1- 2 222 178
- FR-A1- 2 871 231
- FR-A5- 2 071 195
- US-A- 2 760 393
- US-A- 2 899 855
- US-A- 3 830 536
- US-A- 5 257 207
- US-A- 5 878 490
- US-A1- 2004 115 024

## Beschreibung

Die Erfindung betrifft eine wasserhydraulische, drehmomentfreie Schraubenvorspanneinrichtung Schraubverbindungen stellen lösbare Verbindungen von Bauteilen zur Verfügung. Wesentlich für diese Verbindungen ist die Federwirkung von Schraube und verschraubten Teilen (Flansch). Das Anziehen einer Schraube mit einer Vorspannkraft bewirkt ein Dehnen der Schraube und ein Stauchen des Flansches. Die hierdurch resultierende Reibung bewirkt eine Verbindung der beiden Teile in radialer Richtung, die Vorspannkraft selbst blockiert den axialen Freiheitsgrad der beteiligten Teile
Die gängigsten Anziehverfahren, d.h. Verfahren zum Aufbringen einer Vorspannung, lassen sich in zwei Gruppen einteilen. Bei der ersten Gruppe werden die Schraubenbolzen dadurch verspannt, dass die Muttern gedreht werden. Durch die Drehbewegung werden die Bolzen entsprechend der Steigung des Gewindes gelängt und verspannt. Diese Standardschraubverbindungen haben den Nachteil, dass bei Ausnützung der maximalen Vorspannkräfte im Bolzen zwangsläufig Drehmomente über die nicht zu vermeidende Gewindereibung übertragen werden. Dies führt zu einer Überlagerung der Spannung im Bolzen (Zug- plus Schubspannung) und darüber hinaus zu einer Übertragung des Gewindedrehmoments auf die anzuziehenden Flansche. Die Überlagerung der Spannung im Bolzen (Zugplus Schubspannung) führt dann dazu, dass die Schraubverbindung nicht bis an die maximal zulässige Zugspannung angezogen werden kann. Ferner führt die Übertragung des Gewindedrehmoments auf die anzuziehenden Flansche bei empfindlichen Teilen, wie zum Beispiel den Keramikspiegeln eines Spektrometers (z.B. im Raumfahrtprojekt NirSpec) zu einer unakzeptablen und unzulässigen Verformung der Spiegeloberfläche.

Im Raumfahrtprojekt NirSpec, dem Nachfolgeprojekt vom Hubble-Teleskop, und erwartungsgemäß auch in allen zukünftigen optischen Raumfahrtprojekten, müssen alle optischen Spiegel (Keramik) über Reibschluss und eine 3 Schraubenbefestigung mit höchster Vorspannkraft möglichst drehmomentfrei angezogen werden. Hausinterne Versuche mit üblichen Anziehverfahren haben gezeigt, dass auf den Keramikspiegelfuß übertragene Drehmomente sich negativ auf die hohen Anforderungen der Spiegeloberfläche auswirken (Performance-Verlust).

Bei der zweiten Gruppe von Anziehverfahren werden die Schraubenbolzen zunächst gelängt (zum Beispiel mit Hilfe von Hydraulikzylindern), dann werden die Muttern im gelängten Zustand der Bolzen angelegt. Nach dem Entfernen der längenden Kraft ist die Verbindung verspannt. Dadurch sind Torsionsreibungseffekte nur von untergeordneter Bedeutung; Schubspannungen in den Bolzen treten praktisch nicht auf. Im Stand der Technik sind hydraulische Schraubenvorspanneinheiten aus dem Atom- und Windkraftwerksbau bekannt. Diese Einheiten sind allerdings nur für sehr große Schraubverbindungen (ab Durchmesser M24 aufwärts) bekannt und arbeiten alle auf der Basis von Ölhydraulik. Eine hydraulische Schraubenvorspanneinrichtung für Schraubverbindungen ab M4 bis M12 ist im Stand der Technik nicht bekannt, wasserhydraulische Schraubenvorspanneinrichtungen sind ebenfalls nicht bekannt.

Durch die Verwendung von Ölhydraulik haben diese Schraubenvorspanneinheiten den Nachteil, dass sie für Anwendungen in Reinräumen, wie z.B. bei Anwendungen im Bereich der Raumfahrt erforderlich, praktisch nicht geeignet sind. Eine Ölhydraulik kann in einem Reinraum nur bedingt und zwar mit speziellen, aufwendigen Zusatzmaßnahmen eingesetzt werden.

Die bekannten hydraulischen Schraubenvorspanneinheiten, welche nur für sehr große Schraubverbindungen bekannt sind, haben ferner den Nachteil, dass sie im Schadensfall zu einer Zerstörung von empfindlichen Elementen, z.B. hochempfindliche optische Elemente wie sie im Bereich der Raumfahrt verwendet werden, führen würden.
In Raumfahrtprojekten müssen die meisten, gewichtsoptimierten Schraubverbindungen überwacht und mit höchsten Vorspannkräften angezogen werden. Insbesondere bei der Anwendung auf sogenannten optischen Bänken sollen Schraubverbindungen möglichst ohne Drehmomenteinfluss bei gleichzeitig höchster Reinheitsklasse angezogen werden. Jede erzeugte Reibung (z.B. Metall auf Metall, aber auch Metall auf Keramik) führt unweigerlich zu einem Abrieb, welcher sich wiederum auf den optischen Oberflächen niederschlagen kann. Der Erfindungsgegenstand löst insbesondere diese Probleme in optimaler

Schraubenspannvorrichtungen aus dem Stand der Technik werden z.B. in den Dokumenten US 7,066,699, DE 26 25 407, US 2,760,393 oder US 5,257,207 gezeigt.

Es ist eine Aufgabe der vorliegenden Erfindung eine Schraubenvorspanneinrichtung anzugeben, welche in der Lage ist Schraubverbindungen möglichst ohne Drehmomenteinfluss bei gleichzeitig höchster Reinheitsklasse anzuziehen.
Diese Aufgabe wird gelöst durch eine Schraubenvorspanneinrichtung gemäß Anspruch 1. Weitere vorteilhafte Ausgestaltungen der Erfindung finden sich in den Unteransprüchen.
Ein Vorteil der erfindungsgemäßen Schraubenvorspanneinrichtung ist, dass diese Schraubenvorspanneinrichtung für Anwendungen in Reinräumen geeignet, ohne dass es spezieller, aufwendiger Zusatzmaßnahmen bedarf.
Ein weiterer Vorteil der erfindungsgemäßen Schraubenvorspanneinrichtung ist, dass diese Schraubenvorspanneinrichtung für Anwendungen im Zusammenhang mit hochempfindlichen optischen Elementen geeignet; d.h. diese Elemente werden durch die Anwendung der Schraubenvorspanneinheit nicht zerstört.

Ein weiterer Vorteil der erfindungsgemäßen Schraubenvorspanneinrichtung ist, dass diese Schraubenvorspanneinrichtung in der Lage ist Schrauben unter Ausnützung der maximal zulässigen Vorspannung, ohne Drehmomenteinfluss bei gleichzeitig höchster Reinheitsklasse anzuziehen. Insbesondere bei der Anwendung auf so genannten optischen Bänken sollen Schraubverbindungen möglichst ohne Drehmomenteinfluss bei gleichzeitig höchster Reinheitsklasse angezogen werden. Jede erzeugte Reibung (z.B. Metall auf Metall, aber auch Metall auf Keramik) führt unweigerlich zu einem Abrieb, welcher sich wiederum auf den optischen Oberflächen niederschlagen kann.

Ein weiterer Vorteil der erfindungsgemäßen Schraubenvorspanneinrichtung ist, dass diese Schraubenvorspanneinrichtung die Möglichkeit unterstützt Schraubverbindungen während des Anziehvorgangs 2-fach zu überwachen (über den Hydraulikdruck und über die Ultraschall Längungsmessung).

Ein weiterer Vorteil der erfindungsgemäßen Schraubenvorspanneinrichtung ist, dass diese Schraubenvorspanneinrichtung in der Lage ist Schraubverbindungen mit höchsten Vorspannkräften anzuziehen, d.h. je nach verwendetem Verschraubungsmaterial (Titan, Stahl oder auch Inconel), können die Schrauben bis wenige Prozent an Ihre zulässige Streckgrenze angezogen werden.
- Fig. 1: zeigt die erfindungsgemäße Vorspanneinrichtung
- Fig. 2: zeigt eine Außenansicht der erfindungsgemäßen Vorspanneinrichtung

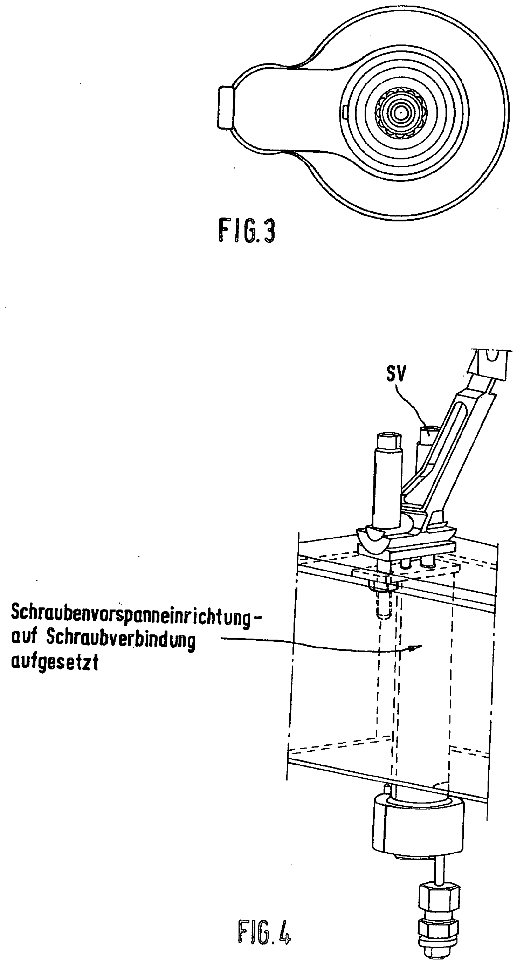

- Fig. 3: zeigt eine Draufsicht auf die erfindungsgemäße Vorspanneinrichtung
- Fig. 4: zeigt die auf eine Schraubverbindung aufgesetzte erfindungsgemäße Vorspanneinrichtung

Im Folgenden werden Ausführungsformen der erfindungsgemäßen Schraubenvorspanneinrichtung im Zusammenhang mit den Zeichnungen beschrieben. Die Erfindung betrifft eine wasserhydraulische Schraubenvorspanneinheit, welche insbesondere für kleine Schraubendurchmesser von M4 bis M12 geeignet ist.

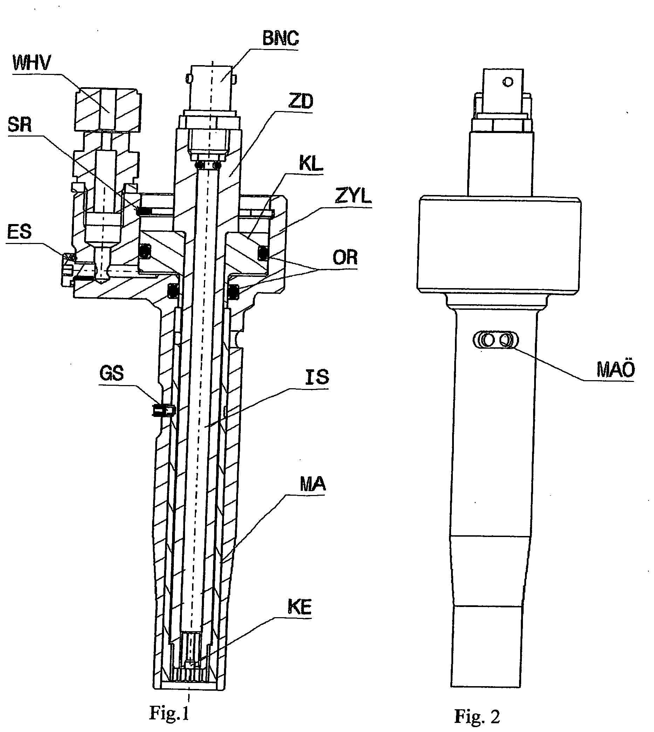

Figur 1 zeigt eine erfindungsgemäße Schraubenvorspanneinrichtung. Ein auf das mindestens 1,5·d, wobei d der Gewindedurchmesser der Schraube oder des Bolzens ist, überstehende Gewinde einer Schraubverbindung aufgeschraubter hochfester Zugdorn (ZD) wird zum Aufbringen einer definierten Vorspannkraft in der Schraubverbindung über einen wasserhydraulischen, mit O-Ringen (OR) abgedichteten Kolben (KL) in Zugrichtung nach außen bewegt. Da hochfeste Schraubverbindungen angezogen werden sollen, muss das Gewinde des Zugdorns mindestens die Festigkeit der höchstfestesten Schraubverbindung welche angezogen werden soll haben, dies entspricht etwa einer Streckgrenze von größer oder gleich 1000 N/mm2 des Zugdorns.
Der Wasserhydraulikdruck wird über eine handelsübliche Hochdruckwasserhandpumpe erzeugt und über kalibrierte Drucksensoren ausgelesen und dokumentiert.
Die hydraulische Vorspanneinrichtung ist mit Hilfe eines handelsüblichen Hochdruckmetallfaltenschlauchs über den Anschlussadapter (WHV) der Vorspanneinheit verbunden. Eventuelle Lufteinschlüsse können über die Entlüftungsschraube (ES) vor Inbetriebnahme entlüftet werden. Der Kolben (KL) wird in einem Zylinder (ZYL) geführt, welcher sich gleichzeitig am unteren Ende auf der Unterlegscheibe der anzuziehenden Schraubverbindung (SV) abstützt.

Die eingeleitete Vorspannkraft führt zu einer Längung der Schraubverbindung und zum Abheben der zuvor nur mit Handkraft angelegten Mutter der Schraubverbindung (SV). Unzulässige Kolbenwege werden über den Sicherungsring (SR) verhindert (mechanischer Anschlag). Die Mutter der Schraubverbindung ist während des Anziehvorgangs ständig im Eingriff mit einer zwischen Zugdorn (ZD) und Zylinder (ZYL) drehbar gelagerten, von außen über die Mutterantriebsöffnung (MAÖ) (siehe Fig. 2) zugänglich Mutterantriebseinheit (MA).

Ist die definierte Vorspannkraft erreicht, wird die Mutter der Schraubverbindung über die Mutterantriebseinheit (MA) und einen von außen angesetzten Stift im Uhrzeigersinn bis zur Anlage der Unterlegscheibe der Schraubverbindung (SV) gedreht. Hierzu verfügt die Mutterantriebseinheit (MA) über ein oder mehrere am Umfang, auf Höhe der Mutterantriebsöffnung (MAÖ) gebohrte Löcher, welche von außen zugänglich sind.

Werden beispielsweise neun Löcher verwendet, kann über diese Löcher die Mutter der Schraubverbindung (SV) in 40° Schritten drehmomentfrei angelegt werden. Im Falle der Verwendung einer anderen Anzahl von Löchern ändert sich die Gradzahl der Schritte entsprechend.

Um verschiedene Gewindegrößen vorspannen zu können, kann sowohl der Zugdorn (ZD) wie auch die Mutterantriebseinheit (MA) mit wenigen Handgriffen ausgetauscht werden. Der Zugdorn (ZD) kann nach oben abgezogen werden, die Mutterantriebseinheit (MA) kann nach dem Öffnen des Gewindestifts (GS) nach unten entnommen werden.

Ferner betrifft die Erfindung eine Vorrichtung, welche die oben beschriebene Schraubenvorspanneinrichtung umfasst und zusätzlich die Erfassung der Vorspannung während des Anziehvorgangs ermöglicht. Diese Vorrichtung umfasst eine käufliche Ultraschallmesseinheit. Integriert in die je nach Gewinde verschiedenen Zugdorneinheiten (ZD) befindet sich eine federbelastete, über eine Isolationshülse (IS) Kontakteinheit (KE), die einen auf dem Gewindeüberstand aufgebrachten Ultraschallsensor (z.B. ein Ultraschall-Piezosensor) ansteuern und auslesen kann. Die elektrische Verbindung zur Kontakteinheit (KE) erfolgt über eine handelsübliche Steckverbindung (BNC). Im Falle des Ultraschall-Piezosensor wird über ein Piezoelement ein Ultraschallsignal zum gegenüberliegenden Gewindeende gesendet, dort reflektiert und vom Piezoelement wieder empfangen. Über die unterschiedliche Lauflänge des Signals kann die echte Längung der Schraubverbindung erfasst werden und somit die vorhandene Vorspannung im Bolzen ausgegeben und dokumentiert werden.

Kleine bis mittlere (Durchmesser M4 bis M12), hochfeste Schraubverbindungen können mit Hilfe der wasserhydraulischen Schraubenvorspanneinrichtung, zweifach kontrolliert und dokumentiert (Hydraulikdruck und Ultraschallmessung), bis an die Grenze ihrer Tragfähigkeit ohne jegliche Drehmomentüberlagerung angezogen werden. Die Schraubenvorspanneinheit eignet sich insbesondere für den Einsatz in Raumfahrtintegrationsräumen, da selbst bei technischem Versagen keine unzulässigen bzw. nicht problemlos entfernbare Verschmutzungen eintreten (Wasser als Hydraulikmedium, geringste Volumina im Hochdruckbereich (ca. 3 bis 10 ccm). Durch Einsatz der Vorspanneinheit können Schraubverbindungen innerhalb von Raumfahrtanwendungen gewichtsmäßig optimiert werden, außerdem werden drehmomentbedingte Performance/Leistungsverluste insbesondere beim Einsatz bei optischen Satelliten auf ein Minimum reduziert.

## Patentansprüche

1. Schraubenvorspanneinrichtung für Raumfahrtanwendungen, umfassend einen hochfesten Zugdorn (ZD), welcher auf eine Schraubverbindung (SV) so aufgeschraubt ist, dass der Zugdorn (ZD) zum Aufbringen einer definierten Vorspannkraft in der Schraubverbindung (SV) über einen wasserhydraulischen Kolben (KL) in eine Zugrichtung, welche durch den Zugdorn (ZD) festgelegt wird, bewegt werden kann, **dadurch gekennzeichnet, dass** die Schraubenvorspanneinrichtung durch einen austauchbaren Zugdorn (ZD) für Schraubendurchmesser von M4 bis M12 ausgebildet ist und die Schraubenvorspanneinrichtung eine Entlüftungseinrichtung (ES) umfasst, wobei Lufteinschlüsse über die Entlüftungseinrichtung (ES) entlüftet werden können..

2. Schraubenvorspanneinrichtung nach Anspruch 1, wobei der Kolben (KL) mit O-Ringen (OR) abgedichtet ist.

3. Schraubenvorspanneinrichtung nach Anspruch 1 oder 2, ferner umfassend eine Hochdruckwasserhandpumpe, wobei der Wasserhydraulikdruck über die Hochdruckwasserhandpumpe erzeugt wird.

4. Schraubenvorspanneinrichtung nach einem der Ansprüche 1 bis 3 ferner umfassend kalibrierte Drucksensoren, wobei der Wasserhydraulikdruck über die kalibrierten Drucksensoren ausgelesen und dokumentiert wird.

5. Schraubenvorspanneinrichtung nach einem der Ansprüche 1 bis 4 ferner umfassend einen Zylinder (ZYL), wobei der Kolben (KL) in dem Zylinder (ZYL) geführt wird, welcher sich gleichzeitig am unteren Ende auf der Unterlegscheibe der anzuziehenden Schraubverbindung (SV) abstützt.

6. Schraubenvorspanneinrichtung nach Anspruch 5 ferner umfassend eine Sicherungsvorrichtung (SR), wobei unzulässige Bewegungen des Kolbens (KL) über die Sicherungsvorrichtung (SR) verhindert werden.

7. Schraubenvorspanneinrichtung nach einem der Ansprüche 1 bis 6 ferner umfassend eine Mutterantriebseinheit (MA), wobei eine Mutter der Schraubverbindung (SV) während des Anziehvorgangs ständig im Eingriff mit einer zwischen Zugdorn (ZD) und Zylinder (ZYL) drehbar gelagerten, von außen über eine Mutterantriebsöffnung (MAÖ) zugänglichen Mutterantriebseinheit (MA) gelagert ist.

8. Schraubenvorspanneinrichtung nach Anspruch 7, wobei die Mutter der Schraubverbindung (SV) über die Mutterantriebseinheit (MA) und einen von außen angesetzten Stift im Uhrzeigersinn bis zur Anlage der Unterlegscheibe der Schraubverbindung (SV) gedreht wird, wenn die definierte Vorspannkraft erreicht ist.

9. Schraubenvorspanneinrichtung nach einem der Ansprüche 7 oder 8, wobei die Mutterantriebseinheit (MA) über ein oder mehrere am Umfang, auf Höhe der Mutterantriebsöffnung (MAÖ) gebohrte Löcher, welche von außen zugänglich sind, verfügt.

## Claims

1. A screw prestressing device for space applications which comprises a high-strength draw pin (ZD) which is screwed onto a threaded connection (SV) in such a manner that the draw pin (ZD) can be moved so as to apply a defined prestressing force in the threaded connection (SV) via a water hydraulic piston (KL) in a draw direction which is set by the draw pin (ZD), **characterized in that** the prestressing device is formed by an exchangeable draw pin (ZD) for screw dimensions M4 to M12 and the screw prestressing device comprises a venting device (ES), wherein air inclusions can be vented via the venting device (ES).

2. The screw prestressing device of claim 1, wherein the piston (KL) is sealed with O-rings (OR).

3. The screw prestressing device of claim 1 or 2, further comprising a high-pressure water hand pump, wherein the water hydraulic pressure is generated by the high-pressure water hand pump.

4. The screw prestressing device of any one of claims 1 to 3, further comprising calibrated pressure sensors, wherein the water hydraulic pressure is detected and documented by the calibrated pressure sensors.

5. The screw prestressing device of any one of claims 1 to 4, further comprising a cylinder (ZYL), wherein the piston (KL) is guided in the cylinder (ZYL) which simultaneously is supported at a lower end on the washer of the threaded connection (SV) to be tightened.

6. The screw prestressing device of claim 5, further comprising a locking device (SR), wherein inadmissible movements of the piston (KL) are prevented by the locking device (SR).

7. The screw prestressing device of any one of claims 1 to 6, further comprising a nut drive unit (MA), wherein a nut of the screw connection (SV) during the tightening operation is continuously supported in engagement with a nut drive unit (MA) which is rotatably-mounted between the draw pin (ZD) and the cylinder (ZYL) and accessible from an outside via a nut drive opening (MAO).

8. The screw prestressing device of claim 7, wherein the nut of the screw connection (SV) is rotated clockwise by the nut drive unit (MA) and a pin applied externally until the nut is in contact with the washer of the through connection (SV) when the defined prestressing force is reached.

9. The screw prestressing device of claim 7 or 8, wherein the nut drive unit (MA) comprises one or more holes drilled on a circumference at a level of the nut drive opening (MAO) which are accessible from the outside.

## Revendications

1. Dispositif de précontrainte de vissage pour applications aérospatiales, comprenant une tige de traction haute résistance (ZD) qui est vissée sur un assemblage par vis (SV) de telle sorte que la tige de traction (ZD) peut, pour exercer une force de précontrainte prédéfinie dans l'assemblage par vis (SV) par l'intermédiaire d'un piston hydraulique à eau (KL), être déplacée dans une direction de traction déterminée par la tige de traction (ZD), **caractérisé en ce que** le dispositif de précontrainte de vissage est constitué par une tige de traction (ZD) interchangeable pour des diamètres de vis allant de M4 à M12 et qu'il comprend un dispositif de ventilation (ES), les inclusions d'air pouvant être évacuées au moyen dudit dispositif de ventilation (ES).

2. Dispositif de précontrainte de vissage selon la revendication 1, l'étanchéité du piston (KL) étant assurée à l'aide de joints toriques (OR).

3. Dispositif de précontrainte de vissage selon la revendication 1 ou 2, comprenant en outre une pompe à eau manuelle haute pression, la pression dans le circuit hydraulique à eau étant produite par ladite pompe à eau manuelle haute pression.

4. Dispositif de précontrainte de vissage selon l'une des revendications 1 à 3, comprenant en outre des capteurs de pression étalonnés, la pression dans le circuit hydraulique à eau étant saisie par lesdits capteurs de pression étalonnés puis enregistrée à des fins de documentation.

5. Dispositif de précontrainte de vissage selon l'une des revendications 1 à 4, comprenant en outre un cylindre (/ZYL), le piston (KL) étant guidé dans ledit cylindre (ZYL) qui s'appuie à son extrémité inférieure sur la rondelle de l'assemblage par vis (SV) à serrer.

6. Dispositif de précontrainte de vissage selon la revendication 5, comprenant un dispositif de sécurité (SR), ce dispositif de sécurité (SR) servant à empêcher tout mouvement inadmissible du piston (KL).

7. Dispositif de précontrainte de vissage selon l'une des revendications 1 à 6, comprenant en outre une unité d'entraînement par écrou (MA), un écrou de l'assemblage par vis (SV) se trouvant pendant l'opération de serrage en prise constante avec une unité d'entraînement par écrou (MA) qui est montée mobile en rotation entre la tige de traction (ZD) et le cylindre (ZYL) et accessible de l'extérieur à travers une ouverture d'entraînement par écrou (MAÖ).

8. Dispositif de précontrainte de vissage selon la revendication 7, l'écrou de l'assemblage par vis (SV) étant mis en rotation et tourné dans le sens des aiguilles d'une montre par le biais de l'unité d'entraînement par écrou (MA) et d'une tige appliquée depuis l'extérieur jusqu'à la venue en appui de la rondelle, une fois la force de précontrainte prédéfinie atteinte.

9. Dispositif de précontrainte de vissage selon l'une des revendications 7 ou 8, l'unité d'entraînement par écrou (MA) comportant sur sa circonférence, à hauteur de l'ouverture d'entraînement par écrou (MAÖ), des trous percés qui sont accessibles depuis l'extérieur.
